# EUROPEAN PATENT APPLICATION

(11) **EP 4 757 259 A1**
(43) Date of publication of application: **10.06.2026**
(21) Application number: 25221097.6
(22) Date of filing: 05.12.2025
(51) Int. Cl.: H04L 25/06

(54) **ML-BASED RECEPTION OF DATA IN A WIRELESS COMMUNICATION SYSTEM**

(30) Priority: 05.12.2024 FI 20246420
(71) Applicant: Nokia Solutions and Networks Oy, 02610 Espoo (FI)
(72) Inventor: KORPI, Dani Johannes, Tampere (FI); HUTTUNEN, Janne Matti Juhani, Espoo (FI); RANINEN, Elias Aksel, Espoo (FI); HONKALA, Mikko Johannes, Espoo (FI)
(74) Representative: Nokia EPO representatives

(57) **Abstract**

The present subject matter relates to a method for reception of data in a wireless communication system, the method comprising: receiving a set of soft bits, referred to as set of raw soft bits, representing at least part of the data; inputting the set of raw soft bits into a machine learning model, to obtain an output comprising a set of symbols, referred to as set of refined soft symbols, and a set of one or more values indicating a signal disturbance level for the set of refined soft symbols; providing the set of refined soft symbols and the set of one or more values for enabling a decoding of the at least part of the data.

## Description

### TECHNICAL FIELD

Various example embodiments relate to telecommunication systems, and more particularly to an apparatus for reception of data in a wireless communication system.

### BACKGROUND

Wireless communication systems like Long Term Evolution (LTE) and Fifth-generation wireless networks (5G) may require advanced signal processing techniques to manage high data rates and complex modulation in noisy environments. Traditional receivers may rely on linear methods, such as demapping and decoding, to interpret these signals. However, there is a growing interest in techniques to enhance receiver performance in challenging conditions.

### SUMMARY

Example embodiments provide an apparatus for reception of data in a wireless communication system, the apparatus comprising at least one processor; and at least one memory storing instructions that, when executed by the at least one processor, cause the apparatus to: receive a set of soft bits, referred to as set of raw soft bits, representing at least part of the data; input the set of raw soft bits into a machine learning model, to obtain an output comprising a set of symbols, referred to as set of refined soft symbols, and a set of one or more values indicating a signal disturbance level for the set of refined soft symbols; provide the set of refined soft symbols and the set of one or more values for enabling a decoding of the at least part of the data.

Example embodiments provide a method for reception of data in a wireless communication system, the method comprising: receiving a set of soft bits, referred to as set of raw soft bits, representing at least part of the data; inputting the set of raw soft bits into a machine learning model, to obtain an output comprising a set of symbols, referred to as set of refined soft symbols, and a set of one or more values indicating a signal disturbance level for the set of refined soft symbols; providing the set of refined soft symbols and the set of one or more values for enabling a decoding of the at least part of the data.

Example embodiments provide a computer program product comprising processor executable instructions for causing an apparatus for performing at least the method.

Example embodiments provide a non-transitory computer readable medium comprising program instructions that, when executed by an apparatus, cause the apparatus to perform at least the method.

### BRIEF DESCRIPTION OF THE DRAWINGS

The accompanying figures are included to provide a further understanding of examples, and are incorporated in and constitute part of this specification. In the figures:
FIG. 1 is a block diagram illustrating an example radio access network in accordance with an example of the present subject matter;
FIG. 2 is a process flowchart illustrating a method for reception of data in a wireless communication system according to an example of the present subject matter;
FIG. 3 is a process flowchart illustrating a method for training a machine learning model according to an example of the present subject matter;
FIG. 4 is a block diagram illustrating components of a receiver and a method for receiving radio frequency signals in accordance with an example of the present subject matter;
FIG. 5A is a block diagram illustrating an example of a neural network architecture applied to the task of mapping log-likelihood ratios (LLRs) to refined soft symbols and estimating noise variance according to an example of the present subject matter;
FIG. 5B is a table illustrating parameters of a machine learning model in accordance with an example of the present subject matter;
FIG. 6 is a block diagram illustrating a training method for a machine learning model that learns to reverse the demapping of noisy symbols to LLRs using a conventional demapper according to an example of the present subject matter;
FIG. 7 is a block diagram illustrating an example of a receiver that leverages a machine learning model for efficient processing of radio frequency signals, specifically designed to enable forwarding of soft symbols over a fronthaul link;
FIG. 8 is a block diagram illustrating an example apparatus according to the present subject matter.

### DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

Modulation symbols are frequently used as a communication format between modules or as input for further processing in wireless communication systems. However, certain receiver components, such as deep learning-based receivers (e.g., DeepRx) or traditional receivers with nonlinear detectors that natively predict LLRs, may output data in a different format, such as bit-format with probability values, to represent bits associated with modulation symbols. The present subject matter may enable conversion (or mapping) of this bit-format output from existing receiver components into symbol-format, facilitating data reception in an alternative format. Additionally, applying a machine learning model trained directly on bit-format data for this conversion may enhance accuracy compared to models using symbol-format as input. The present subject matter may provide a lightweight, approximated solution to the mapping problem, meeting accuracy requirements for subsequent processing steps.

The wireless communication system comprises nodes such as base stations, wherein each node may serve devices located within the node's geographical area of service. The wireless communication system may support one or more radio access technologies (RATs). A radio access technology of the radio access technologies may, for example, be evolved universal terrestrial radio access (E-UTRA), 5G new radio (NR), or a Sixth-generation wireless networks (6G) based system, but it is not limited to, as a person skilled in the art may apply the present subject matter to other wireless communication systems provided with necessary properties. The device may refer to an equipment that connects to and communicates with the wireless communication system to access services and applications provided by the wireless communication system. The device may, for example, be a user equipment. The device may, for example, comprise any one of: a mobile phone, a tablet, an Internet of things (IoT) device, or a laptop.

An apparatus may be provided for enabling reception of data in the wireless communication system. The apparatus may, for example, be provided as a component of a receiver, wherein the receiver may be part of a node or a device in the wireless communication system. Alternatively, the apparatus may comprise the receiver. The data may, for example, be sent to the receiver by a set of one or more devices of the wireless communication system.

A radio frequency signal may be received by the receiver. The radio frequency signal comprises the data transmitted by the set of one or more devices. The received radio frequency signal may include one or more individual radio frequency signals, each received from a respective antenna of an antenna system of the receiver. The antenna system may comprise one or more antennas. The receiver is configured to process each individual radio frequency signal through a corresponding receiver chain to obtain a baseband signal. The apparatus according to the present subject matter may be provided as a centralized component within the receiver that interfaces with the one or more receiver chains of the receiver.

Upon receiving the radio frequency signal, the corresponding baseband signal may be obtained and then sampled within a specific time window, resulting in a set of time-domain samples specific to that time window. The time window may comprise one or more transmission units. The transmission unit may, for example, represent an Orthogonal Frequency Division Multiplexing (OFDM) symbol. The time window may, for example, be a Transmission Time Interval (TTI). The set of time-domain samples may then be converted into a set of frequency-domain samples representing a set of frequency units respectively, and with each frequency-domain sample representing an individual modulation symbol. The set of frequency units may, for example, be subcarriers or resource block groups (RBGs). The set of frequency-domain samples for the time window may, for example, be a set of modulation symbols respectively. The size of the set of modulation symbols may, for example, be equal to the number of subcarriers multiplied by the number of transmission units within the time window. If there is more than one individual radio frequency signal, the size of the set of modulation symbols may instead be the number of subcarriers multiplied by the number of transmission units in the time window, further multiplied by the number of antennas through which the individual radio frequency signals are received respectively. At this stage of reception, the information available indicates that the exact position of each modulation symbol, of the set of modulation symbols, which is within the constellation of the given modulation scheme may still be unknown. The set of modulation symbols may thus be referred to as set of initial modulation symbols. Depending on the modulation scheme, each modulation symbol of the set of initial modulation symbols may represent a block of bits (e.g., 4 or 6 bits). In cases where the received radio frequency signal is encoded using a Multiple Input Multiple Output (MIMO) technique, each frequency unit within the set of frequency units may simultaneously be used by one or more data streams. For example, each initial modulation symbol may consist of a superposition of individual initial modulation symbols, either representing multiple transmitters or representing multiple streams from the same transmitter. In this case, the set of initial modulation symbol may represent a (larger) set of individual initial modulation symbols. This may imply that each initial modulation symbol can encode multiple blocks of bits.. The modulation scheme may be one used by the set of one or more devices to encode data, and correspondingly employed by the receiver to decode the received data.

The set of initial modulation symbols may subsequently be processed, by a given component of the receiver, to obtain potential values for each bit within each initial modulation symbol. Specifically, for each initial modulation symbol, the given component may generate at least one block of bits represented as a block of probabilities, where each probability indicates the likelihood of a particular bit being either one or zero. For example, if the initial modulation symbols are a superposition of individual initial modulation symbols, the given component may generate a group of bits for each individual initial modulation symbol. Each probability may be expressed as a single value (e.g., a LLR value) or as a vector of values, where each element in the vector represents the likelihood of a respective bit (0 or 1). Thus, each block of probabilities may be referred to as a block of soft bits, and the collection of soft bit blocks derived from the set of frequency-domain samples constitutes a set of soft bits. A soft bit may be a representation of a bit, where the soft bit may include information about the confidence in the bit's value, rather than just a hard decision of '0' or '1.' Unlike a (normal) bit, which is strictly binary, a soft bit may, for example, be provided as information e.g., in the form of a scale, such as from -1 to +1 or 0 to 1, to reflect the likelihood of the bit being a '1' or a '0. It is also possible to represent the soft bit with a logarithmic scale, in which case the range of values could be any real number (positive or negative). Such a logarithmic value is referred to as log-likelihood ratio (LLR). The LLR may be calculated as the logarithm of the ratio of probabilities between the bit being zero or being one. This set of soft bits is referred to as a set of raw soft bits for naming purpose because it represents the initial, unprocessed probability values according to the present subject matter.

The given component may be referred to as the frequency-domain samples processing component. In one example, the frequency-domain samples processing component may, for example, be configured to perform equalization of the set of initial modulation symbols to mitigate channel effects, before further processing them to obtain the set of raw soft bits. The equalization of the set of initial modulation symbols may result in a set of equalized modulation symbols. In one example, the frequency-domain samples processing component may apply a machine learning model (e.g., a deep neural network) to the set of initial modulation symbols to generate the set of raw soft bits. In this configuration, the equalization may be integrated within the model's processing layers. Hence, steps or processes performed on the set of raw soft bits (e.g., after equalization is performed) may be referred to as post-equalization (post-EQ) processing. However, these are only two possible examples, and the present subject matter is not limited to these configurations; other approaches may also be employed within the scope of the frequency-domain samples processing component.

Hence, for each sampling time window of the radio frequency signal, a set of raw soft bits may be generated. This indicates that the set of raw soft bits represents at least part of the data transmitted by the set of one or more devices, as the time window may only partially capture the entire radio frequency signal. Accordingly, the set of raw soft bits reflect the data within the boundaries of the sampled time window, which may or may not fully cover the complete transmission from the set of devices.

The apparatus may be configured to receive the set of raw soft bits. The apparatus may, for example, receive the set of raw soft bits from the frequency-domain samples processing component. The apparatus may be configured to input the set of raw soft bits into a machine learning model to obtain an output from the machine learning model. The apparatus may, for example, comprise the machine learning model or have access to it e.g., through an interface. The output of the machine learning model comprises a set of symbols and a set of one or more values indicating a signal disturbance level for the set of symbols. The set of symbols may be referred to as set of soft symbols for naming purpose. Each symbol of the set of symbols may represent a potential candidate for a modulation symbol within a given modulation scheme. The modulation symbol may be a representation of data in the modulation scheme, where bits are mapped to distinct signal waveforms or points in a constellation. Each modulation symbol corresponds to a unique combination of bits.

The set of soft symbols may be referred to as a set of refined soft symbols, as they as they may represent an improved estimation compared to the set of initial modulation symbols (and the set of equalized modulation symbols), due to additional processing that may enhance accuracy. This set of refined soft symbols may provide an approximation of the actual modulation symbols of the data, delivering a more precise representation of the transmitted data by reducing uncertainties associated with the set of initial modulation symbols. The set of refined soft symbols may represent the set of initial soft symbols respectively. Alternatively, in the case of MIMO transmission, the set of refined soft symbols may represent the set of individual initial modulation symbols respectively.

The set of one or more values may quantify the level of disturbance (e.g., noise, interference, fading) present in the radio frequency signal, offering insight into the reliability of the set of refined soft symbols. By indicating the degree of signal disturbance, these values may enable the receiver to evaluate the confidence level in the set of refined soft symbols. This information may be applied in subsequent processing stages, such as error correction or symbol-to-soft-bit mapping, to enhance data recovery and optimize overall system performance.

The machine learning model used by the apparatus may be an algorithm trained to take soft bits as input and produce symbols as output, along with one or more values that indicate the signal disturbance level associated with the symbols. The machine learning model is trained to recognize and analyze patterns within the input soft bits, enabling it to refine and transform them into a more accurate representation of the transmitted data. Additionally, the machine learning model may assess signal quality, supporting improved decision-making in subsequent processing stages. The machine learning model may be a neural network, particularly a deep neural network, or another type of model capable of handling patterns in the input soft bits to deliver refined symbols and the one or more values as output.

The machine learning model may, for example, be configured to produce an output whose size corresponds to the number of set of frequency units and the number of sets of one or more values. Alternatively, in the case of MIMO transmission, the machine learning model may, for example, be configured to produce an output whose size corresponds to the number of the set of individual initial modulation symbols and the number of sets of one or more values.

The apparatus may be configured to provide the set of refined soft symbols and the set of one or more values for enabling a decoding of the at least part of the data. The present subject matter may enable to output accurate soft symbol representations of the original soft bits. The apparatus may, for example, send the set of refined soft symbols to another component of the receiver in order to decode them. This other component may be referred to as decoding component. For decoding. the decoding component may, for example, apply demapping to the set of refined soft symbols to obtain soft bits. These soft bits may then be further processed, such as through descrambling or decoding (e.g., low-density parity-check (LDPC) decoding), to produce final bits representing the received data. By decoding the set of refined soft symbols, the decoding component may enable the extraction of bits representing the data within the time window of the radio frequency signal. The apparatus may, for example, comprise the decoding component or alternatively, be connected to the decoding component via a communication link such as a fronthaul link.

According to one example, each refined soft symbol of the set of refined soft symbols comprises a real value and an imaginary value representing a position of the refined soft symbol in a modulation constellation of a modulation scheme used for reception of the data at the apparatus.

For example, each refined soft symbol within the set of refined soft symbols may consist of a real and an imaginary value. These values together may represent the position of the refined soft symbol within the modulation constellation of the modulation scheme used for data reception at the apparatus. The modulation constellation may be a grid or diagram where each point represents a possible modulation symbol, with its real and imaginary components indicating its exact position. However, the refined soft symbol's position within the modulation constellation may be offset from exact constellation points due to noise and other channel impairments.

According to one example, each refined soft symbol of the set of refined soft symbols corresponds to a block of bits, with the number of bits in each block represents a modulation order of a modulation scheme used for reception of the data at the apparatus.

Each refined soft symbol in the set of refined soft symbols corresponds to a block of bits, with the number of bits in each block determined by the modulation order of the modulation scheme used for data reception. For instance, in a 16-Quadrature Amplitude Modulation (QAM) scheme, each refined soft symbol corresponds to a block of 4 bits, while in a 64-QAM scheme, each refined soft symbol corresponds to 6 bits.

According to one example, the apparatus may be configured to group the set of raw soft bits into blocks of raw soft bits. Each block of raw soft bits of the blocks of raw soft bits represents a modulation symbol obtained from the data by a modulation scheme used for reception of the data at the apparatus. The input of the machine learning model comprises the blocks raw soft bits.

By grouping raw soft bits into symbol-based blocks, the machine learning model may more effectively analyze and interpret the data, as it processes each symbol as a unit rather than individual, unstructured bits. This organization may align with the modulation scheme, helping the machine learning model recognize symbol patterns and account for potential errors introduced by noise or interference.

Additionally, with blocks, the input may be reshuffled or reordered as needed to optimize processing, allowing the machine learning model to adjust to varying signal conditions or data sequences. In one example, the blocks may be provided in a specific order as input to the machine learning model or reorganized dynamically based on signal quality or decoding requirements. This flexibility may allow the machine learning model to adapt to different transmission conditions by emphasizing higher-confidence blocks or reordering based on other performance metrics.

According to one example, the set of one or more values are multiple values associated with the set of refined soft symbols respectively, with each value indicating a signal disturbance level for the respective refined soft symbol.

This per-symbol disturbance level may provide granular information on the quality and reliability of each refined soft symbol in the received data, allowing the receiver to assess confidence levels at a more detailed level. This may enable more adaptive and accurate error correction, as the receiver can prioritize symbols with lower disturbance levels or apply different decoding techniques based on the disturbance level. Since the set of values may be provided after the processing by the frequency-domain samples processing component the signal disturbance level may be referred to as post-equalization signal disturbance level.

For example, the set of values may be associated with individual resource elements (REs) in the time-frequency domain. Specifically, the time window may correspond to an OFDM symbol, and the set of refined soft symbols may span the subcarriers within that OFDM symbol respectively. This approach may provide a detailed, per-resource-element measure of signal quality, allowing the receiver to assess and respond to variations in signal disturbance at a granular level.

According to one example, the set of one or more values is one value representing a signal disturbance level for the entire set refined soft symbols.

This single-value indicator may provide a summary measure of the signal quality affecting the entire data within the time window, allowing the receiver to gauge the general reliability of the received symbols. The advantage of using one aggregate disturbance level may be its simplicity and efficiency, as it may require minimal processing and storage resources while still offering a useful insight into the signal's integrity.

According to one example, the time window represents one or more OFDM symbols, or a TTI.

The OFDM symbol may represent a short-duration segment of the radio frequency signal, while a TTI encompasses a longer duration that may include multiple OFDM symbols. This flexibility in defining the time window may allow the apparatus to adapt its processing based on signal conditions and data requirements. When using a single OFDM symbol, the apparatus may perform rapid and low-latency processing. Alternatively, using a TTI as the time window may provide a more comprehensive view of the radio frequency signal, for improving error correction by analyzing a larger data block.

The apparatus may be configured to repeat the method for each subsequent time window of the radio frequency signal until the entire radio frequency signal is fully processed. This continuous, window-by-window processing may allow the apparatus to handle streaming data efficiently, maintaining real-time analysis and decoding of the received signal.

According to one example, the machine learning model comprises a neural network. The neural network comprises a reshaping block to separate an output of the neural network into two distinct parts for the set of refined soft symbols and the set of one or more values respectively.

In this setup, the machine learning model is implemented as a neural network that includes the reshaping block, designed to split the network's output into two distinct parts: one for the set of refined soft symbols and another for the set of values indicating signal disturbance levels. This structure may allow the neural network to efficiently perform dual tasks in a single pass. The reshaping block may simplify the processing pipeline, enabling the network to output both the refined data and quality metrics simultaneously.

According to one example, the apparatus may be configured to perform the providing of the set of refined soft symbols and the set of one or more values by sending the set of refined soft symbols and the set of one or more values through a fronthaul link to a distributed unit (DU).

This configuration may enable centralized processing and decision-making in the distributed unit, which may have more powerful processing capabilities compared to the apparatus itself. By offloading the set of refined soft symbols and signal quality values to the distributed unit, the apparatus may conserve local resources, reducing its processing load and power consumption.

The decoding component as described herein may, for example, comprise the distributed unit.

According to one example, the set of raw soft bits are LLR values respectively. Each LLR value provides a probabilistic measure of confidence for a bit's state (either 0 or 1). LLR values may be advantageous because they capture the uncertainty in each bit's value, offering a "soft" decision rather than a binary determination. Thus, representing raw soft bits as LLRs may improve decoding reliability, especially in noisy conditions.

According to one example, each value of the set of one or more values is a signal-to-interference-plus-noise ratio (SINR) value or signal-to-noise ratio (SNR) value. Since the set of values may be provided after the processing by the frequency-domain samples processing component the SINR and SNR may be referred to as post-equalization SINR and post-equalization SNR respectively.

According to one example, the apparatus may be configured to train the machine learning model using a training dataset. The training dataset comprises entries, where each entry of the entries comprises an input component and associated label component, where the input component comprises an output of a demapper of a receiver chain of the wireless communication system and the associated label component is an input of the demapper associated with that output of the demapper.

The demapper may be configured to receive equalized symbols and calculate the soft bits or LLRs. Training the machine learning model directly to LLRs may produce improved results compared to training to symbols.

The input component in each entry represents the output from the demapper, capturing the processed signal after initial demapping, while the label component represents the original input to the demapper, effectively providing the "ground truth" data. This setup may allow the machine learning model to learn the relationship between the noisy, demapped data and the original equalized data symbols, enabling it determine a soft symbol corresponding to a set of soft bits.

In an alternative example, the training of the machine learning model may be performed by another apparatus and the resulting trained machine learning model may be received by the apparatus.

According to one example, the training dataset is generated through a simulation of the receiver, where the input to a simulated demapper of the demapper of the receiver chain is subjected to noise from a noise source with randomly varying noise power.

In this example, the training dataset is generated by simulating the receiver, where the input to a simulated demapper is exposed to noise from a noise source with randomly varying noise power. This setup may allow the training data to encompass a wide range of noise conditions, effectively mimicking real-world scenarios where signal quality fluctuates due to varying interference and channel conditions. This may make the machine learning model more resilient improving its ability to accurately recover transmitted data across various noise conditions.

According to one example, the noise source is additive white gaussian noise (AWGN) source.

The noise source used in the simulation is an AWGN source. By using AWGN in the training dataset, the machine learning model may learn to handle a type of noise that commonly affects wireless channels, making it more effective in practical scenarios.

The training may be conducted using stochastic gradient descent (SGD) for updating the machine learning model' parameters iteratively to minimize a loss function. The loss function may, for example, comprise a mean squared error (MSE) or cross-entropy loss function. The combination of SGD and e.g., MSE, may ensure efficient convergence, as SGD may facilitate the learning of the parameters, while MSE provides a clear metric for minimizing prediction errors.

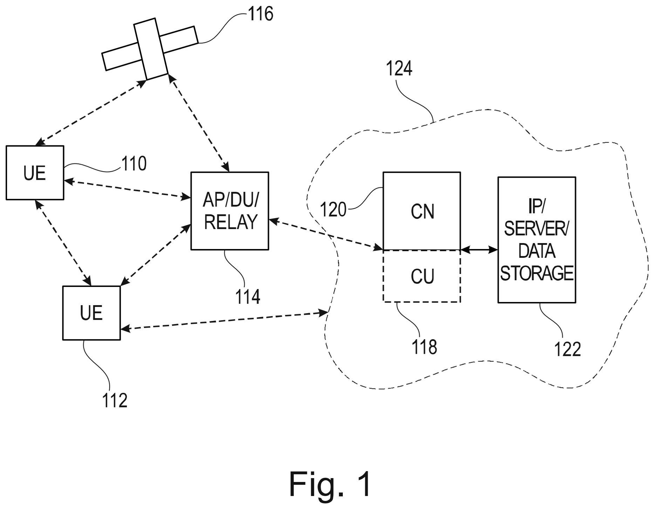

FIG. 1 is a block diagram illustrating an example radio access network in accordance with an example of the present subject matter. FIG. 1 illustrates examples of simplified system architectures only showing some elements and functional entities, all being logical units, whose implementation may differ from what is shown. The connections illustrated in FIG.1 are logical connections; the actual physical connections may be different. It is apparent to a person skilled in the art that the system typically comprises also other functions and structures than those illustrated in FIG.1.

The embodiments are not, however, restricted to the system given as an example but a person skilled in the art may apply the solution to other communication systems provided with necessary properties.

The example radio access network illustrated in FIG.1 includes devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to devices. The antenna unit may comprise a plurality of antennas or antenna elements. The (e/g)NodeB is further connected to the core network 120 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in loT network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment just to mention but a few names or apparatuses.

Various techniques described herein may also be applied to a cyber-physical system (CPS) (a system of collaborating computational elements controlling physical entities). CPS may enable the implementation and exploitation of massive amounts of interconnected (ICT) devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all illustrated in FIG. 1) may be implemented.

5G enables using MIMO antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require bringing the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. The MEC structure also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, loT (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is illustrated in FIG.1 using "cloud" 124). The communication system may also comprise a central control entity, or a like, providing facilities for networks of different operators to cooperate for example in spectrum sharing.

The technology of edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit (DU)) and non-real time functions being carried out in a centralized manner (in a centralized unit, CU 118).

It should also be understood that the distribution of labor between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or NodeB (NB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NBs, the device may have an access to a plurality of radio cells and the system may comprise also other apparatuses, such as physical layer relay nodes or other network elements, etc. One of the (e/g)NBs may be a Home(e/g)NB (H(e/g)NBs). Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NBs are required to provide such a network structure.

For fulfilling the need for improving the deployment and performance of communication systems, the concept of "plug-and-play" (e/g)NBs has been introduced. Typically, a network which is able to use "plug-and-play" (e/g)NBs, includes, in addition to H(e/g)NBs, a home NodeB gateway, or HNB-GW (not illustrated in FIG.1). A HNB-GW, which is typically installed within an operator's network, may aggregate traffic from a large number of HNBs back to a core network.

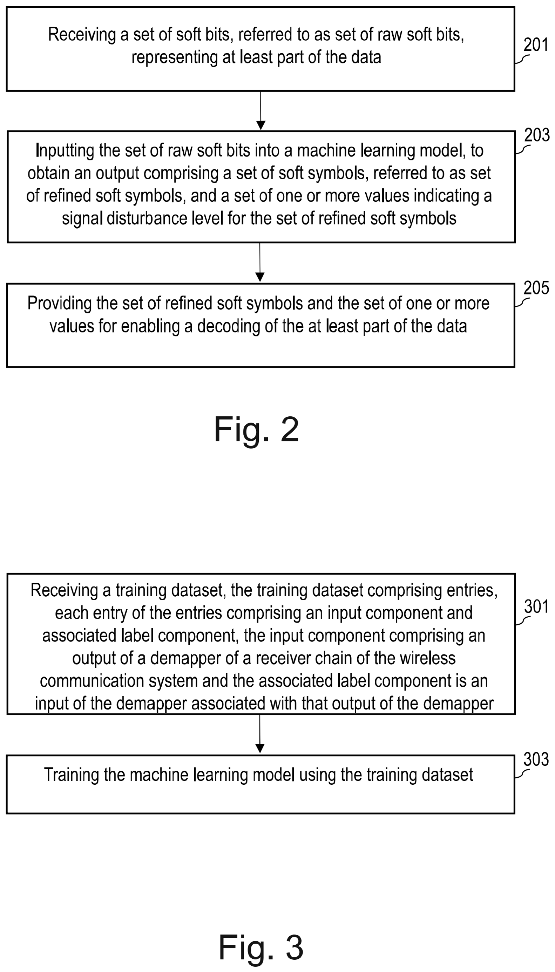

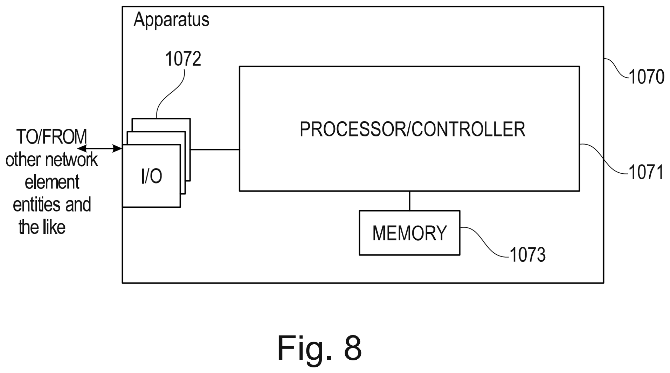

FIG. 2 is a process flowchart illustrating a method for reception of data in a wireless communication system according to an example of the present subject matter. For the purpose of explanation, the method described in reference to FIG. 2 may be implemented in an apparatus such as the node 114 illustrated and described in reference to FIG. 1 or apparatus illustrated and described in reference to FIG. 8 but is not limited to this implementation.

At block 201, a set of soft bits, referred to as set of raw soft bits, representing at least part of the data may be received.

At block 203, the set of raw soft bits may be input into a machine learning model, to obtain an output comprising a set of symbols, referred to as set of refined soft symbols, and a set of one or more values indicating a signal disturbance level for the set of refined soft symbols.

At block 205, the set of refined soft symbols and the set of one or more values may be provided for enabling decoding of the at least part of the data. For example, the enabling at block 205 may comprises using the set of refined soft symbols and the set of one or more values to recover the at least part of the data.

In one example implementation of the block 205, the decoding may, for example, comprise application of demapping to the set of refined soft symbols to obtain soft bits representing the at least part of the data. The obtained soft bits may be used to recover the at least part of the data. In one example implementation of the block 205, the decoding may further comprise processing these soft bits through descrambling and decoding technique (e.g., LDPC decoding), to produce bits representing the at least part of the data.

FIG. 3 is a process flowchart illustrating a method for training a machine learning model according to an example of the present subject matter. For the purpose of explanation, the method described in reference to FIG. 3 may be implemented in an apparatus such as the node 114 illustrated and described in reference to FIG. 1 or apparatus illustrated and described in reference to FIG. 8 but is not limited to this implementation.

At block 301, a training dataset may be received. The training dataset comprises entries. Each entry of the entries comprises an input component and associated label component, where the input component comprises an output of a demapper of a receiver of the wireless communication system and the associated label component is an input of the demapper associated with that output of the demapper.

At block 303, the machine learning model may be trained using the training dataset.

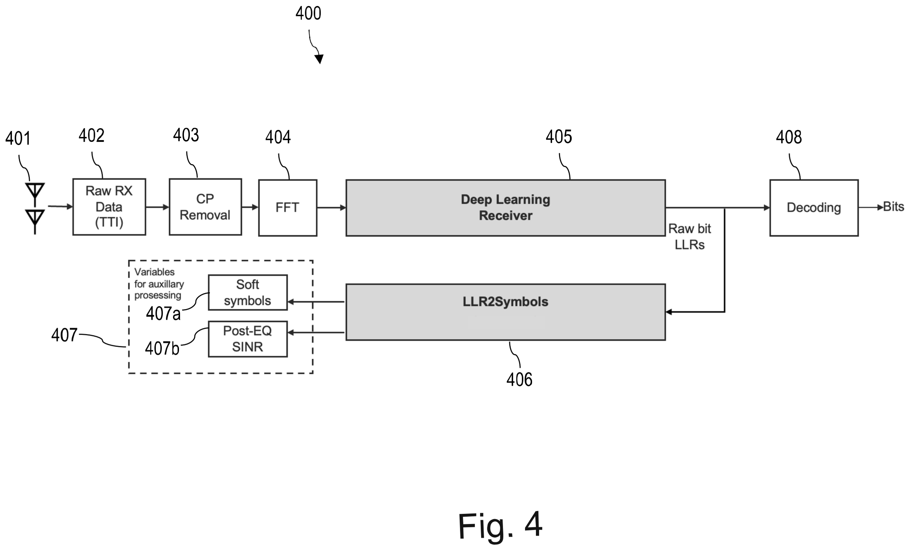

FIG. 4 is a block diagram illustrating components of a ML-based receiver and a method for receiving radio frequency signals in accordance with an example of the present subject matter. The receiver 400 comprises an antenna system 401, configured to receive a radio frequency signal. The received radio frequency signal may be converted into raw received data organized per TTI in block 402. This data undergoes cyclic prefix (CP) removal in block 403, followed by a Fast Fourier Transform (FFT) in block 404, which prepares the data in the frequency domain as a set of initial modulation symbols. The set of initial modulation symbols is then fed into a deep learning receiver in block 405, which produces raw LLRs. These LLRs are processed by an "LLR2Symbols" component in block 406 using a machine learning model, which provides output in block 407, including refined soft symbols (block 407a) and SINR information (block 407b). The LLRs may also be sent to the decoding block 408, where the LLRs are converted into bits.

The LLR2Symbols component may provide an example implementation of the apparatus according to the present subject matter. The deep learning receiver may provide an example implementation of the frequency-domain samples processing component according to the present subject matter.

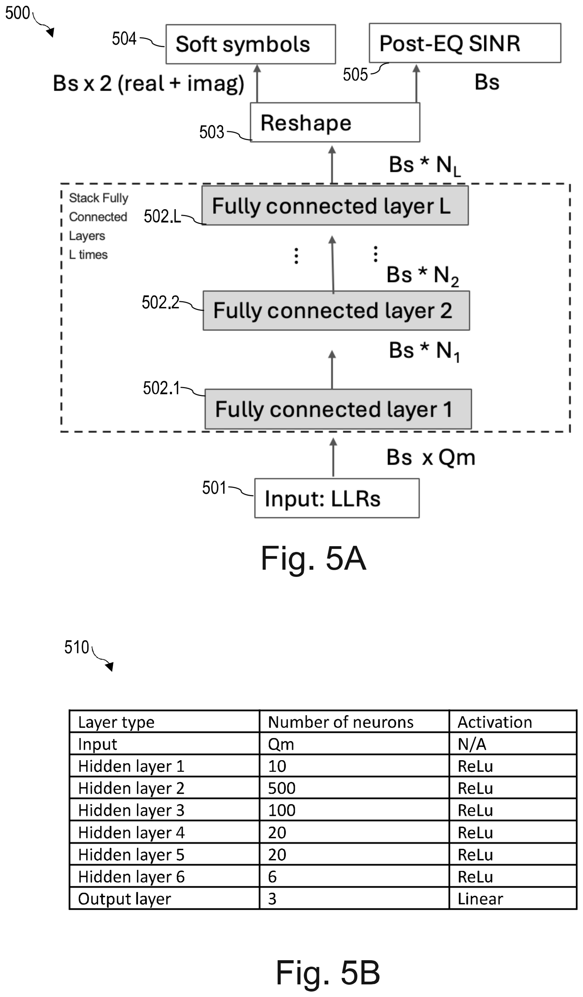

FIG. 5A is a block diagram illustrating an example of a neural network architecture applied to the task of mapping LLRs to refined soft symbols and estimating noise variance according to an example of the present subject matter.

The input to the neural network 500, denoted as Input: LLRs in block 501, represents the LLRs, which may be produced by a DeepRx receiver such as the deep learning receiver of FIG. 4. This input has dimensions Bs × Qm, where Bs is a batch size, and Qm is the modulation order, indicating the number of LLRs (or bits) per modulation symbol. Bs may, for example, represent the number of equalized modulation symbols in a slot, from which the input, consisting of Bs blocks of LLRs, is respectively obtained.

The LLRs are fed through several fully connected layers which are the trainable components in the neural network 500. The first layer 502.1, Fully connected layer 1, processes the LLRs with a neuron count of N₁ and outputs data with dimensions Bs × N₁. This is followed by a second layer 502.2 Fully connected layer 2, which further transforms the data to dimensions Bs × N₂ with N₂ neurons, and subsequently a L-th layer 502.L Fully connected layer L with Nₗ neurons, producing output of dimensions Bs × Nₗ.

After passing through these layers, the output is reshaped in Reshape block 503 to separate the network output into two distinct parts: soft symbols in block 504, which has dimensions Bs × 2 (for real and imaginary components), and post-EQ SINR in block 505, representing the post-equalization SINR with dimensions Bs. This division may allow the network 500 to output soft symbol estimates along with an estimate of noise variance (represented by the SINR).

Hence, the neural network 500 may follow a fully connected architecture, applied independently to each resource element and layer in the system. An example of the hyperparameters, such as the number of neurons per layer (Nᵢ) and modulation order (Qm), are listed in table 510 of FIG. 5B. The table 510 lists the number of neurons in each layer of the neural network, assuming that the batch size Bs is one, Bs=1. This setup enables the neural network to handle different modulation schemes, with Qm changing based on the modulation order (e.g., 4 bits per symbol for 16-QAM).

The neural network 500 may provide an example implementation of the machine learning model according to the present subject matter. The soft symbols in block 504 may provide an example implementation of the set of refined soft symbols and the post-EQ SINR in block 505 may provide an example implementation of the set of one or more values of the machine learning model.

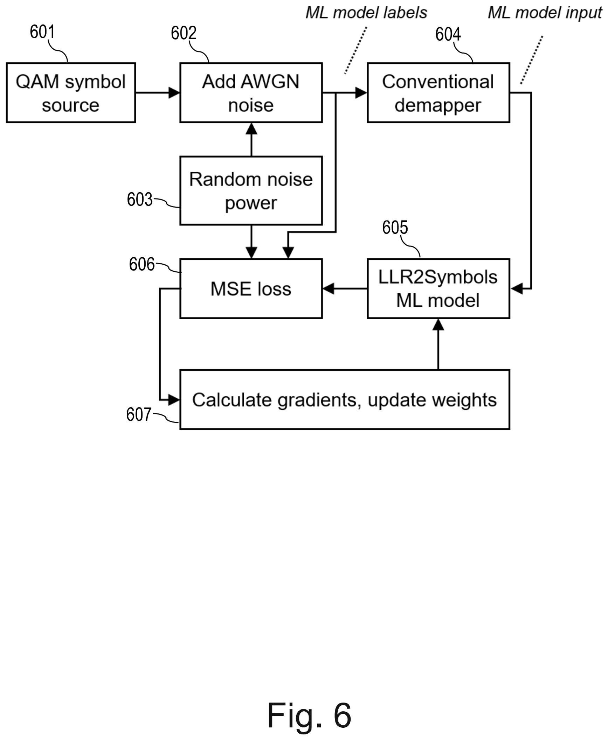

FIG. 6 is a block diagram illustrating a training method of a machine learning model according to an example of the present subject matter. The training method may involve simulation data for performing the training. The machine learning model may, for example, be the model used by the LLR2Symbols component in FIG. 4 to generate the soft symbols 407a and the post-EQ SINR 407b.

Training begins with the QAM symbol source in block 601, which generates or simulates QAM symbols at the desired modulation order. These QAM symbols are then passed to block 602, where AWGN is added to the QAM symbols. The added noise level is controlled by random noise power in block 603, allowing the machine learning model to encounter a range of noise conditions.

The noisy QAM symbols are subsequently input to a conventional demapper in block 604. In this setup, the input to the demapper may be treated as the desired output of the machine learning model and the demapper's output (LLR values) may serve as the input to the machine learning model in block 605. Additionally, the random noise power is used as a label, as it represents one of the outputs of the ML model.

The machine learning model is trained by comparing its output with the conventional demapper's input, using in block 606 MSE loss as the loss function to measure the model's performance. The calculated gradients may be used to update weights of the machine learning model in block 607 using SGD to minimize the loss. This iterative training procedure enables the machine learning model to learn the requirements for accurate symbol-to-LLR mapping, regardless of the specific noise characteristics of the AWGN channel used in the simulation.

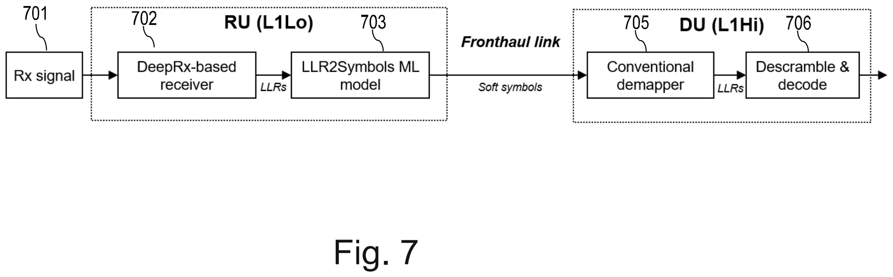

FIG. 7 is a block diagram illustrating an example of a receiver that leverages a machine learning model for efficient processing of radio frequency signals, specifically designed to enable forwarding of soft symbols over a fronthaul link.

The process begins with the radio frequency signal in block 701, which is received and processed using the DeepRx-based receiver in block 702 within the radio unit (RU) (L1Lo). This DeepRx-based receiver produces LLRs as output. These LLRs are then input to a machine learning model of the LLR2Symbols component in block 703, which serves as an encoder by mapping LLRs to soft symbols. The output of the machine learning model comprises both refined soft symbol estimates and a noise variance estimate. This information, particularly the refined soft symbols, is transmitted over the fronthaul link to the distributed unit (L1Hi), where further processing occurs.

Upon reaching the DU, the refined soft symbols are passed to a conventional demapper in block 705, which maps the refined soft symbols back to LLRs, effectively restoring the original LLRs. These LLRs are then processed by the descramble & decode block 706, yielding the final decoded information.

The ability of the machine learning model of the LLR2Symbols component to output noise variance estimates alongside soft symbols may allow for calculating the post-EQ SINR, similar to conventional linear receivers. This post-EQ SINR may provide valuable signal quality information that would otherwise be challenging to obtain from the DeepRx-based receiver alone, as it may not internally represent soft symbols. Additionally, the noise variance output may be viewed as the reciprocal of the post-EQ SINR, offering flexibility depending on the implementation of the receiver algorithm.

In FIG. 8, a block circuit diagram illustrating a configuration of an apparatus 1070 is shown, wherein the apparatus 1070 is configured to implement at least part of the present subject matter. It is to be noted that the apparatus 1070 illustrated in FIG. 8 may comprise several further elements or functions besides those described herein below, which are omitted herein for the sake of simplicity as they are not essential for the understanding. Furthermore, the apparatus may be also another device having a similar function, such as a chipset, a chip, a module, etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the subject matter described throughout this disclosure. In particular, the apparatus 1070 may be configured to perform the method as described in reference to FIG. 2 or 3.

For example, the processor 1071 is configured for: receiving a set of soft bits, referred to as set of raw soft bits, representing at least part of the data; inputting the set of raw soft bits into a machine learning model, to obtain an output comprising a set of soft symbols, referred to as set of refined soft symbols, and a set of one or more values indicating a signal disturbance level for the set of refined soft symbols; and providing the set of refined soft symbols and the set of one or more values for enabling a decoding of the at least part of the data.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium.

In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. An apparatus for reception of data in a wireless communication system, the apparatus comprising at least one processor; and at least one memory storing instructions that, when executed by the at least one processor, cause the apparatus to:
receive (201) a set of soft bits, referred to as set of raw soft bits,
representing at least part of the data;
input (203) the set of raw soft bits into a machine learning model, to obtain an output comprising a set of symbols, referred to as set of refined soft symbols, and a set of one or more values indicating a signal disturbance level for the set of refined soft symbols;
provide (205) the set of refined soft symbols and the set of one or more values for enabling a decoding of the at least part of the data.

2. The apparatus of claim 1, wherein each refined soft symbol of the set of refined soft symbols comprises a real value and an imaginary value representing a position of the refined soft symbol in a modulation constellation of a modulation scheme used for reception of the data at the apparatus.

3. The apparatus of claim 1, wherein each refined soft symbol of the set of refined soft symbols corresponds to a block of bits, with the number of bits in each block represents a modulation order of a modulation scheme used for reception of the data at the apparatus.

4. The apparatus of any of the preceding claims, wherein the instructions, when executed by the at least one processor, further cause the apparatus to:
group the set of raw soft bits into blocks of raw soft bits, each block of raw soft bits of the blocks of raw soft bits representing a modulation symbol obtained from the data by a modulation scheme used for reception of the data at the apparatus, wherein the input of the machine learning model comprises the blocks of raw soft bits.

5. The apparatus of any of the preceding claims, wherein the set of one or more values are multiple values associated with the set of refined soft symbols respectively, each value indicating a signal disturbance level for the respective refined soft symbol.

6. The apparatus of any of the preceding claims 1 to 4, the set of one or more values being one value representing a signal disturbance level for the entire set refined soft symbols.

7. The apparatus of any of the preceding claims, the set of raw soft bits representing the data being received in a specific time window, the time window being one or more Orthogonal Frequency Division Multiplexing (OFDM) symbols, or a Transmission Time Interval (TTI).

8. The apparatus of any of the preceding claims, the machine learning model comprising a neural network, the neural network comprising a reshaping block to separate an output of the network into two distinct parts for the set of refined soft symbols and the set of one or more values respectively.

9. The apparatus of any of the preceding claims, wherein the instructions, when executed by the at least one processor, further cause the apparatus to:
perform the providing of the set of refined soft symbols and the set of one or more values by sending the set of refined soft symbols and the set of one or more values through a fronthaul link to a distributed unit.

10. The apparatus of any of the preceding claims, the set of raw soft bits being log-likelihood ratio (LLR) values.

11. The apparatus of any of the preceding claims, each value of the set of one or more values being a Signal-to-Interference-plus-Noise Ratio (SINR) value or Signal-to-Noise Ratio (SNR) value.

12. The apparatus of any of the preceding claims, wherein the instructions, when executed by the at least one processor, further cause the apparatus to:
train the machine learning model using a training dataset, the training dataset comprising entries, each entry of the entries comprising an input component and associated label component, the input component comprising an output of a demapper of a receiver of the wireless communication system and the associated label component is an input of the demapper associated with that output of the demapper.

13. The apparatus of claim 12, wherein the training dataset is generated through a simulation of the receiver, where the input to a simulated demapper of the demapper of the receiver chain is subjected to noise from a noise source with randomly varying noise power.

14. The apparatus of claim 13, the noise source being Additive White Gaussian Noise (AWGN) source.

15. The apparatus of any of the preceding claims, comprising another machine learning model that is configured to output the set of raw soft bits in response to receiving a baseband signal in a frequency domain comprising the at least part of the data.
